# FASCICULE DE BREVET EUROPEEN

(11) **EP 0 707 890 B1**
(45) Date de publication et mention de la délivrance du brevet: **19.01.2000**
(21) Numéro de dépôt: 95402216.6
(22) Date de dépôt: 04.10.1995
(51) Int. Cl.: B01J 37/20

(54) **Procédé de prétraitement hors site d'un catalyseur de traitement d'hydrocarbures**
Verfahren zur Vorbehandlung vor Verwendung eines Katalysators für die Behandlung von Kohlenwasserstoffen
Process for pretreating before use a catalyst for the treatment of hydrocarbons

(30) Priorité: 07.10.1994 FR 9412096
(43) Date de publication de la demande: 24.04.1996
(73) Titulaire: EURECAT EUROPEENNE DE RETRAITEMENT DE CATALYSEURS, F-07800 La Voulte-sur-Rhône (FR)
(72) Inventeur: Dufresne, Pierre, F-26000 Valence (DE)
(74) Mandataire: Andreeff, François

(56) Documents cités:
- EP-A- 0 002 272
- EP-A- 0 530 068
- FR-A- 1 349 022
- FR-A- 2 149 429

## Description

La présente invention concerne un procédé de prétraitement ou d'activation d'un catalyseur d'hydroconversion d'hydrocarbures incluant initialement une présulfuration hors site du catalyseur. Mais le catalyseur au lieu d'être activé directement sous hydrogène dans le réacteur de conversion d'hydrocarbures est activé ex situ (hors site) en présence d'hydrogène, puis toujours ex situ (hors site) est remis à l'air avant d'être ensuite transporté, puis chargé dans le réacteur de conversion d'hydrocarbures.

L'invention consiste donc à prétraiter un catalyseur selon un procédé hors site comportant :
- l'incorporation d'un agent de sulfuration dans une masse catalytique,
- un traitement à l'hydrogène entre 150 et 700°C du catalyseur,
- une mise à l'air du catalyseur.

Les catalyseurs selon l'invention peuvent être par exemple constitués d'un support de type alumine ou alumine dopée (par du fluor, du chlore, du bore, du silicium) ces supports pouvant au moins en partie se présenter sous forme amorphe ou sous forme cristallisée (zéolithe) et le catalyseur renfermant en outre 0,2 à 40% d'au moins un métal actif des groupes VI, VIII ou autres choisi par exemple dans le groupe constitué, par le cobalt, le molybdène, le nickel et le tungstène. On utilise généralement un couple de deux de ces métaux, par exemple l'un des couples cobalt-molybdène, nickel-molybdène, nickel-tungstène. On peut ainsi éventuellement utiliser un métal noble du groupe VIII de la famille du platine : Pt, Pd.

Ainsi, avant d'être utilisé, le catalyseur, neuf ou régénéré, est soumis généralement dans l'art antérieur, à une sulfuration (présulfuration) effectuée dans le réacteur d'hydrotraitement. Cette sulfuration permet d'inclure dans le catalyseur, par exemple, 50 à 110 % environ des quantités stoechiométriques de soufre calculées sur les quantités de sulfures de formule, (selon les métaux présents) Co₉S₈, MoS₂, WS₂ et Ni₃S₂. En effet, les phases actives de ces catalyseurs sont des sulfures mixtes alors que les catalyseurs neufs ou régénérés contiennent des oxydes.

Cette sulfuration (présulfuration) est effectuée, dans l'art antérieur, à une température voisine ou plus élevée (ainsi supérieure à 180°C et plus particulièrement au-dessus de 250°C) pr rapport à la température réactionnelle choisie pour la réaction d'hydrodésulfuration, d'hydrocraquage, d'hydrogénation, pendant quelques heures, au moyen d'un mélange de composé sulfuré généralement dilué dans de l'hydrogène.

Actuellement, la régénération des catalyseurs se fait de plus en plus chez un spécialiste de la régénération de catalyseurs, parfois loin de l'unité industrielle. Or, il parait raisonnable de penser à restituer au raffineur un produit prêt à l'emploi, ce qu'ont permis les procédés efficaces du brevet Européen EP-B-130 850 et EP-B-181 254 de la demanderesse dans lequel un composé sulfuré est incorporé dans la masse catalytique, lequel composé, provoque la sulfuration ou la présulfuration du catalyseur lorsque, ultérieurement, dans la zone réactionnelle (zone de traitement de la charge) ou à proximité immédiate de la zone réactionnelle, le catalyseur sera mis en contact d'hydrogène. Bien entendu, l'incorporation du dit composé sulfuré peut, si on le désire, être effectuée à proximité de l'unité industrielle ou même sur le lieu de traitement de catalyseur ; le procédé d'incorporation du dit composé sulfuré peut être effectué en hors site également sur un catalyseur neuf ou régénéré, avant sa mise en oeuvre dans l'unité industrielle.

Le raffineur, ou tout autre utilisateur active ensuite ce catalyseur dans le réacteur de conversion d'hydrocarbures en présence d'hydrogène à une température par exemple de 250 à 350°C (pour un catalyseur de désulfuration par exemple afin de faire réagir le soufre sur les métaux contenus et démarrer aussitôt la réaction de raffinage ou de conversion d'hydrocarbures par injection de la charge à traiter.

Le présent procédé selon l'invention permet d'améliorer l'activation du catalyseur et se caractérise par un traitement en présence d'hydrogène hors site du catalyseur suivie d'une mise sous air du catalyseur, afin de réaliser une passivation oxydante du catalyseur. A ce stade ensuite, le catalyseur est envoyé chez le raffineur. Ce traitement de sulfuration peut être réalisé sur catalyseur neuf ou régénéré.

Un brevet (brevet français N° 1,349,022) a déjà proposé un procédé de la présulfuration d'un catalyseur. Cette présulfuration a pour but de protéger un catalyseur instable à l'air en vue de son transport. Le procédé de ce brevet consiste donc à neutraliser le catalyseur par sulfuration de la surface des grains, donc, il s'agit d'une sulfuration partielle du catalyseur, laquelle est suivie d'une oxydation seulement superficielle du catalyseur. Il est impératif dans ce brevet français de ne sulfurer que la surface du catalyseur. Sulfurer davantage est indésirable. Dans la présente invention, la sulfuration est voisine de la stoechiométrie, puis est suivie d'une réduction à l'hydrogène du catalyseur ; la totalité du catalyseur réduit est ensuite passivée pour éliminer notamment les traces d'hydrogène résiduel.

L'invention concerne le procédé suivant :

Ce procédé de prétraitement hors site d'un catalyseur qui contient un support à base d'alumine ou d'alumine dopée et au moins un métal choisi dans le groupe constitué par le molybdène, le tungstène, le cobalt et le nickel. Le procédé consiste :
- à incorporer hors site dans la masse catalytique au moins un agent de sulfuration en présence d'au moins un solvant, ou composé similaire,
- à passiver hors site le dit catalyseur.

Le procédé est caractérisé en ce qu'on incorpore dans la masse catalytique une quantité de soufre correspondant à 80 à 110 % de la quantité stoechiométrique nécessaire pour la présulfuration des éléments actifs du catalyseur c'est à dire à l'obtention d'au moins un sulfure choisi dans le groupe constitué par MoS₂, CO₉S8, WS₂ et Ni₃S₂, et il est caractérisé également en ce que d'une part le catalyseur dans lequel on a incorporé un agent de sulfuration est traité par de l'hydrogène pur ou dilué, de façon à ce que le catalyseur soit réduit, et d'autre part le catalyseur réduit est passivé par balayage du catalyseur par de l'air ou par un gaz contenant de l'oxygène.

De façon plus détaillée, l'invention comprend :
a) l'incorporation hors site dans la masse catalytique, par exemple dans sa porosité, d'au moins un agent de sulfuration, cet agent étant un composé soufré choisi dans le groupe constitué par le soufre élémentaire, les polysulfures organiques (décrits dans EP-B 130 850 et 181 254), l'hydrogène sulfuré (H₂S), les mercaptans, le sulfure de carbone CS₂, les sulfures, les disulfures, les composés thiophéniques ou toute autre molécule contenant du soufre susceptible de se décomposer sous l'action de l'hydrogène sulfuré (on choisira de préférence le soufre, les polysulfures organiques, le diméthylsulfure (DMS) et le diméthyldisulfure (DMDS). On peut employer au moins un solvant, par exemple, un white spirit ou une essence désaromatisée ou non (comme décrits dans EP-B-130 850 et 181 254) et/ou au moins tout autre solvant adéquat et en particulier au moins un constituant contenant des liaisons carbonées de type oléfiniques, par exemple un constituant tel que décrit dans EP-A-564 317 : à titre d'exemple, on peut utiliser un mélange renfermant en poids 0,1 à 99,9 % d'un white spirit ou solvant équivalent et 99,9 à 0,1 % d'un composé ou constituant de type oléfinique et de préférence 2 à 98 % d'un white spirit ou solvant équivalent et 2 à 98 % d'au moins le dit composé ou constituant de type oléfinique. D'une façon générale, le dit constituant utilisé seul ou en mélange peut être un hydrocarbure ou une coupe hydrocarbonée quelconque susceptible de contenir des doubles liaisons. Ce peut être des oléfines (monoléfines, dioléfines ou polyoléfines) ou des coupes pétrolières susceptibles de contenir des oléfines, comme des coupes issues de certains procédés de raffinage pétrolier comme notamment la viscoréduction, la cokéfaction, le craquage à la vapeur. Ce constituant peut de façon préférée être aussi du type triglycéride d'acides gras insaturés comme les huiles végétales.
   Lorsque le dit composé ou constituant est choisi dans les constituants des huiles végétales, il appartient notamment à la famille des triglycérides d'acides gras. Parmi les huiles, on citera notamment celles dérivées d'acides gras insaturés tels que des acides éthyléniques par exemple, les acides myristoléique, palmitoléique, oléique, élaïdique (isomère géométrique de l'acide oléique), gadoléique, érucique, des acides polyéthyléniques (acides polyéthyléniques des huiles par exemple l'acide linoléique, l'acide linolénique), ces huiles peuvent aussi contenir des acides gras saturés comme par exemple les acides butyrique, caproïque, caprylique, caprique, laurique, myristique, palmitique, stéarique, arachidique. Ainsi, le constituant entrant dans la formulation du mélange (mélange-solvant) peut être à base d'ester d'acide gras, lesquels acides contiennent 6 à 24 atomes de carbone et une, deux ou trois liaisons de type oléfinique ou est à base des huiles de colza, d'arachide, de soja, de maïs, de tournesol, de carthame, de palme, de lin, ou de graisses animales de suif ou de saindoux. Comme indiqué ci-dessus, les huiles préférées sont les huiles de colza, d'arachide, de soja, de maïs, de tournesol, de carthame, de palme, de lin.
   L'introduction de l'agent de sulfuration est faite dans des gammes de température comprises par exemple entre 0 et 200°C (voire 30 - 200°C).
   L'agent de sulfuration est donc introduit dans la masse catalytique, en fonction des températures choisies indiquées ci-dessus, soit par fusion et/ou sublimation, soit par dissolution, soit encore sous forme d'une suspension, soit par passage de l'agent de sulfuration en phase gazeuse, ou partiellement selon l'une des techniques et partiellement selon une autre des techniques indiquées ci-dessus. Il peut être introduit en absence de solvant ou autre additif.
b) La réalisation éventuelle d'un traitement thermique en l'absence d'hydrogène du catalyseur ex situ (hors site) à une température supérieure à 100°C généralement et de préférence supérieure à 120°C. Ce traitement est conseillé dans certains cas et notamment quand on a mis le catalyseur en contact avec l'agent de sulfuration et un liquide contenant éventuellement un solvant de type white spirit ou un solvant apparenté et un composé de type oléfinique ; le mélange obtenu est soumis ainsi à un traitement thermique visant d'une part à éliminer le solvant, d'autre part à provoquer notamment une réaction de combinaison entre le soufre et les doubles liaisons du composé oléfinique. Le traitement thermique s'effectue à une température supérieure à 100°C et de préférence supérieure à 120°C. Si l'agent de sulfuration est le soufre élémentaire, celui-ci est ainsi combiné partiellement ou complètement sous forme d'un polysulfure. Cette réaction est analogue à celle qui est connue dans un tout autre domaine technique, celui de l'industrie des pneumatiques, appelée opération de vulcanisation. Celle-ci, utilisée pour améliorer les propriétés mécaniques du caoutchouc naturel, s'effectue par addition de soufre élémentaire avec le caoutchouc naturel suivie de traitement thermique. Le soufre réagit avec les doubles liaisons du caoutchouc qui est un polyisoprène pour former des ponts mono ou polysulfures entre les chaînes carbonées.
c) Le traitement sous hydrogène hors site (ex situ). pur ou dilué (dilution entre 1 et 50 %, voire 2 et 20 % en hydrogène) du catalyseur entre 150 et 700°C et de préférence entre 250 et 600°C. On opère généralement sous pression atmosphérique, pendant quelques heures (1 à 10 heures par exemple). Pour cette étape, on dispose d'une grande flexibilité au niveau du choix des conditions opératoires : choix de la température, du gaz, de sa dilution, choix de la nature du lit catalytique (lit fixe, tournant, mobile, expansé, bouillonnant, fluide) permettant ici une meilleure homogénéité dans la répartition de l'agent de sulfuration dans le lit catalytique avec en outre une température rigoureusement constante pour tous les grains du lit. Cette étape c peut s'effectuer après les étapes a et b. Elle peut aussi être simultanée à l'étape a, à savoir que l'introduction de l'agent de sulfuration et le traitement sous hydrogène sont simultanés. Il n'y a alors pas d'étape b.
d)) La réalisation éventuelle hors site d'un refroidissement du catalyseur généralement jusqu'à la température ordinaire) par exemple sous courant de gaz inerte ou en laissant ensuite le catalyseur sous couvert de gaz inerte (azote par exemple).
e) La réalisation ex situ (hors site) d'une passivation. Cette passivation, à titre d'exemple, est une passivation oxydante, consistant à effectuer un balayage du catalyseur par de l'oxygène de préférence dilué (concentration en volume inférieure à 30 %, voire inférieure à 10 %, voire inférieure à 5 %) et/ou par balayage à l'air (mise à l'atmosphère), étape(s) au cours de laquelle ou desquelles s'effectue une réoxydation partielle des sulfures métalliques incorporés dans la masse catalytique (passivation oxydante). Au cours de cette étape, il y a adsorption d'oxygène par le catalyseur. Cette étape confère au catalyseur une activité supérieure à celle observée avec d'autres catalyseurs dans lesquels l'agent de sulfuration a été introduit selon des méthodes de l'art antérieur. Le contact du catalyseur avec de l'oxygène dilué (ou tout gaz contenant de l'oxygène par exemple de l'oxygène moléculaire) peut se faire en deux temps ou plusieurs temps avec augmentation progressive de la concentration en oxygène, par exemple environ 1 %, puis 5 %) à titre d'illustration.

L'invention convient particulièrement bien pour l'incorporation d'un agent de sulfuration dans les catalyseurs d'hydrotraitements lorsque ceux-ci ensuite sont chargés dans un réacteur dans une zone d'hydrotraitement puis remis sous hydrogène dans cette zone d'hydrotraitement.

Les autres avantages du procédé sont notamment les suivants : le catalyseur, à l'issue du traitement est prêt à l'emploi. Il est utilisable en raffinage ou pétrochimie après une simple procédure de démarrage qui consiste à injecter la charge à traiter directement à basse température, même à température ambiante sans aucun risque de lixiviation du soufre. Il y a une différence fondamentale chimiquement discernable à l'analyse du catalyseur : on est en présence à l'issue du traitement à l'hydrogène d'une phase sulfure(s), c'est-à-dire en présence, si par exemple les éléments actifs du catalyseur sont le molybdène, ou le tungstène, ou le cobalt ou le nickel, du ou des sulfures, de phases de type : MoS₂ (ici donc Mo⁴⁺ correspond à un sulfure), Co₉S8, WS₂, Ni₃S₂.

Les phases "sulfures" dans le catalyseur traité conformément à l'invention et à ce stade de la préparation, c'est-à-dire après traitement sur H₂ sont clairement identifiées et identifiables par spectroscopie de photoelectrons X (SPX) qui peut par exemple montrer que le molybdène ou le tungstène sont essentiellement (en général à plus de 70 %) au degré d'oxydation 4 (type MoS₂, WS₂) alors qu'ils sont complètement au degré d'oxydation 6 (MoO₃, WO₃) sur un catalyseur neuf ou régénéré, et également majoritairement (>50%) au degré d'oxydation 6 sur un catalyseur présulfuré selon les procédés de l'art antérieur ; ce dernier catalyseur contenant des phases de type oxysulfure.

Une différence conceptuelle très importante entre l'invention et les procédés de l'art antérieur est la suivante : auparavant, l'utilisateur chargeait dans son réacteur un catalyseur d'hydrotraitement contenant des métaux qui chimiquement sont à l'état d'oxydes ou à l'état d'oxysulfures. Ils n'étaient pas encore actifs catalytiquement et ce n'est que dans le réacteur que se fabriquaient les sulfures. Cette étape délicate, la genèse de la phase active, pouvait être mal maîtrisée et était surtout non contrôlable et non caractérisable. L'objet de la présente invention est la fourniture directe à l'utilisateur d'un catalyseur déjà actif, et dont l'activité catalytique est caractérisable avant chargement dans le réacteur. Cette invention supprime tout risque d'obtenir une activité catalytique non optimale dans le réacteur.

La quantité de soufre incorporée dans la masse catalytique au cours de l'étape (a) correspond généralement à 80 à 110% de la quantité stoechiométrique nécessaire pour la présulfuration des éléments actifs du catalyseur, de préférence entre 90 et 105 % de cette quantité stoechiométrique.

D'autre part, une passivation, par exemple oxydante, permet également d'éliminer la tendance pyrophorique de ces phases sulfurées et permet donc un transfert aisé du solide clans des fûts métalliques ou d'autres types de containers. D'autre part, la passivation oxydante a un effet positif sur l'activité catalytique.

Les exemple suivants illustrent l'invention : les exemples comparatifs illustrent diverses méthodes de présulfuration de l'art antérieur avec ensuite une activation sous hydrogène du catalyseur in situ dans le réacteur de conversion d'hydrocarbures. Les exemples selon l'invention illustrent les mêmes méthodes de présulfuration de l'art antérieur, mais avec ensuite, conformément à l'invention, activation ex situ (hors site) du catalyseur sous hydrogène, puis toujours ex situ (hors site) balayage du catalyseur par de l'oxygène dilué par de l'air avant de l'envoyer dans le réacteur de conversion d'hydrocarbures.

### Exemple 1: (comparatif)

Un catalyseur d'hydrodésulfuration de type CoMo en grains de diamètre 1,2 mm contenant 19,0 % poids de MoO₃ et 4,3 % poids de CoO a été utilisé. Appelé catalyseur A dans les différents exemples qui suivent, il est présulfuré ou sulfuré avec des teneurs en soufre correspondant à la vapeur théorique stoechiométrique des sulfures MoS₂ et Co₉S₈. Une stoechiométrie de 100 % correspond à 10,25 % poids de soufre, exprimé sur valeur sèche, corrigée de la perte au feu.

Ce catalyseur A (1000 g) est mélangé à un tertiononylpolysulfure, contenant 37 % poids de soufre et à un solvant de type white spirit, de telle façon à remplir le volume poreux (550 ml). Le catalyseur imprégné est laissé une heure dans un ballon rotatif à froid puis 2 heures à 150°C, de façon à évaporer les hydrocarbures et fixer le soufre du polysulfure organique. On obtient ainsi le catalyseur B dont les caractéristiques sont reportées au tableau.

### Exemple 2 : (comparatif)

Le catalyseur A (1000 g) est imprégné par une suspension de 105 g de élémentaire, 22 g d'huile de colza et 330 ml de white spirit, puis laissé une heure à froid et chauffé 2 heures à 180°C; On obtient ainsi le catalyseur C.

### Exemple 3 : (comparatif)

Le catalyseur A (1000 g) est imprégné par une suspension de 105 g de S élémentaire et 55 ml de white spirit, puis laissé une heure à froid et chauffé 2 heures à 180°C. On obtient ainsi le catalyseur D.

### Exemple 4:

Les catalyseurs B, C, D préparés selon les descriptions des exemples précédents sont activés sous hydrogène dans un four rotatif tubulaire dans les conditions suivantes :
- température : 400°C,
- Temps : 6 heures,
- Gaz : mélange 5/95 hydrogène/azote,
- pression : normale.

A la fin de la période d'activation, le système est refroidi et purgé 4 heures sous azote et balayé par un mélange à 1 % d'oxygène dans l'azote pendant 2 heures, puis à 5 % d'oxygène pendant 2 heures, puis à l'air pendant à heures. Les catalyseurs E, F, G sont préparés respectivement à partir des catalyseurs B, C, D.

Exemple 5:

Le catalyseur B est traité comme dans l'exemple 4, si ce n'est que la fin de l'étape d'activation est suivie d'une purge à l'azote, mais qu'on ne réalise pas de passivation oxydante. Le catalyseur est coulé directement à l'abri de l'air dans une flacon rempli de white spirit. On obtient ainsi le solide H.

### Exemple 6:

Les catalyseurs sulfurés A à H ont été caractérisés selon différentes méthodes : mesures de taux de carbone, soufre, perte au feu à 500°C, Analyse Thermique Différentielle (ou Differential Scanning Calorimetry - DSC) sous un bar d'hydrogène et une vitesse de montée en température de 5°C/minute, analyse par Spectroscopie de Photoelectrons X (SPX), test catalytique d'hydrodésulfuration (HDS) de gazole.

Pour ce test, les conditions sont les suivantes :
- charge : gasoil atmosphérique de points initial et final respectivement 220°-370°C,
- Teneur en S : 0,8 % poids,
- teneur en N : 120 ppm poids,
- pression : 40 bar,
- quantité de catalyseur : 70 ml,
- débit de charge : 140 l/heure,
- température : 340°C.
La procédure de démarrage implique une montée à 320°C à la vitesse de 100°C/heure, l'injection de la charge liquide du test à 100°C, un palier de 2 heures à 320°C et la montée à 340°C.

Les résultats des caractérisations sont présentés au tableau récapitulatif et commentés ci-après.

Les catalyseurs B et C, non conformes à l'invention, utilisent des procédures de présulfuration analogues à celles revendiquées dans les brevets USP 4530917, 4719195 et la demande de brevet français 92/04051. Les catalyseurs sont "présulfurés" de telle façon à former une phase métallique de type oxysulfure. En effet, la couleur de ces catalyseurs est passée du bleu au gris foncé. D'autre part, les spectres SPX montrent que le degré d'oxydation du molybdène est encore essentiellement +6, même si une modification substantielle est notée par rapport au spectre du catalyseur frais. Les activités catalytiques des catalyseurs B et C sont voisines.

Le catalyseur D, sulfuré simplement avec du soufre, reste bleu ; il donne lieu à un important isotherme en DSC sous hydrogène et présente une faible activité catalytique.

Les catalyseurs E, F, G, conformes à l'invention, sont de couleur noire, ne présentent aucun signal d'exothermie en DSC sou hydrogène (ce qui est logique puisqu'ils sont déjà activés sous hydrogène par le procédé de l'invention). Ils présentent des spectres SPX caractéristiques du MoS₂ avec un degré d'oxydation ⁴⁺. Les activités catalytiques sont notablement plus élevées que ce qui est mesuré pour les catalyseurs préparés selon les procédures de l'art antérieur.

Le catalyseur H, homologue du catalyseur E, mais qui n'a pas subi de passivation oxydante, est évidemment noir, et de caractère Mo⁴⁺. Son activité catalytique est néanmoins légèrement plus faible que celle de son homologue H, montrant l'intérêt de la procédure de passivation intermédiaire.

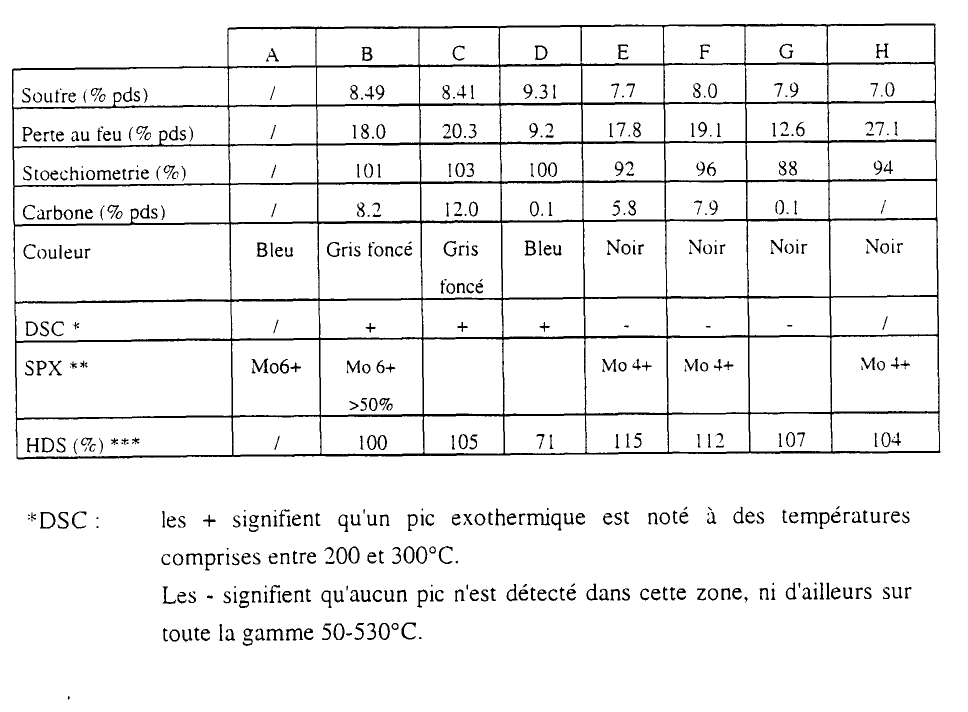

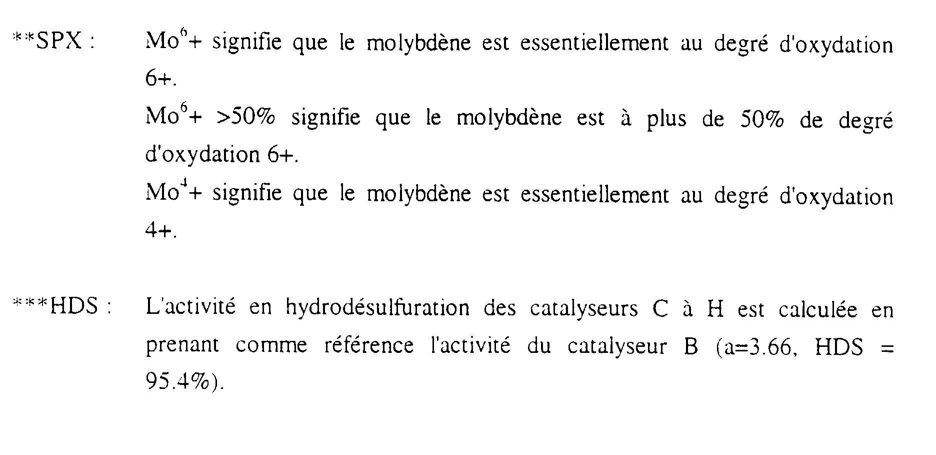

## Revendications

1. Procédé de prétraitement hors site d'un catalyseur contenant un support à base d'alumine ou d'alumine dopée et au moins un métal choisi dans le groupe constitué par le molybdène, le tungstène, le cobalt et le nickel, procédé comportant :
- l'incorporation hors site dans la masse catalytique d'au moins un agent de sulfuration en présence d'au moins un solvant, ou composé similaire,
- la passivation hors site du dit catalyseur,
le procédé étant caractérisé en ce qu'on incorpore dans la masse catalytique une quantité de soufre correspondant à 80 à 110 % de la quantité stoechiométrique nécessaire pour la présulfuration des éléments actifs du catalyseur, c'est-à-dire à l'obtention d'au moins un sulfure choisi dans le groupe constitué par MoS2, Co9S8, WS2 et Ni3S2 et en ce que d'une part, le catalyseur dans lequel on a incorporé un agent de sulfuration est traité par de l'hydrogène pur ou dilué de façon à ce que le catalyseur soit réduit, et d'autre part, le catalyseur réduit est passivé par balayage du catalyseur par de l'air ou par un gaz contenant de l'oxygène.

2. Procédé selon la revendication 1, dans lequel la température d'incorporation d'un agent de sulfuration est comprise entre 0 et 200°C.

3. Procédé selon l'une des revendications 1 ou 2 dans lequel :
a) on incorpore entre 30 et 200°C hors site dans la masse catalytique au moins un agent de sulfuration en présence d'au moins un solvant et/ou d'au moins un constituant contenant des liaisons carbonées de type oléfinique.
b) on effectue hors site un traitement thermique, en absence d'hydrogène, du catalyseur.
c) on traite hors site le catalyseur entre 150 et 700°C en présence d'hydrogène pur ou dilué,
d) on refroidit le catalyseur jusqu'à température ordinaire qui est ensuite laissé sous courant de gaz inerte,
e) on procède hors site à un balayage du catalyseur d'abord par de l'oxygène dilué de concentration inférieure à 10 % environ (exprimé en volume d'oxygène), puis par de l'air.

4. Procédé selon la revendication 1, dans lequel les deux premières étapes de traitement par un agent sulfurant et par l'hydrogène sont simultanées.

5. Procédé selon l'une des revendications 1 à 4 dans lequel l'agent de sulfuration est choisi dans le groupe constitué par le soufre élémentaire, les polysulfures organiques, l'hydrogène sulfuré, les mercaptans, le sulfure de carbone, les sulfures, les disulfures, les composés thiophéniques.

6. Procédé selon la revendication 5 dans lequel l'agent de sulfuration est choisi dans le groupe constitué par le soufre élémentaire, les polysulfures organiques, le diméthylsulfure et le diméthyldisulfure.

7. Procédé selon l'une des revendications 1 à 6 dans lequel le solvant est un white spirit.

8. Procédé selon l'une des revendications 2 à 6 dans lequel le constituant est un hydrocarbure oléfinique, en particulier une huile dérivée des acides gras.

9. Procédé selon l'une des revendications 1 à 8 dans lequel on traite hors site le catalyseur (dans lequel un agent de sulfuration a été incorporé), par de l'hydrogène, pur ou dilué, à une température comprise entre 250 et 600°C.

## Patentansprüche

1. Verfahren zur Vorbehandlung vor Verwendung eines Katalysators, der einen Träger auf der Grundlage von Aluminiumoxid oder von einem mit einem Wirkstoff versehenen Aluminiumoxid und mindestens ein Metall enthält, das aus der Gruppe, bestehend aus Molybden, Tungsten, Kobalt und Nickel, ausgesucht wird, wobei das Verfahren vorsieht, dass
- mindestens ein Schwefelungsmittel in Gegenwart von mindestens einem Lösungsmittel oder einer ähnlichen Verbindung der Katalysatormasse außerhalb der Konversionsanlage beigemengt wird,
- der besagte Katalysator außerhalb der Konversionsanlage passiviert wird,
und dadurch gekennzeichnet ist, dass der Katalysatormasse eine Schwefelmenge zugesetzt wird, die 80 bis 110 Prozent der stöchiometrischen Menge entspricht, die zur Vorschwefelung der Katalysatoraktivbestandteile, d. h. zur Gewinnung von mindestens einem Sulfid, das aus der Gruppe, bestehend aus MoS2, Co9S8, WS2 und Ni3S2, ausgesucht wird, erforderlich ist, und dass einerseits der Katalysator, dem ein Schwefelungsmittel beigemengt wurde, mit reinem oder verdünntem Wasserstoff behandelt wird, um eine Katalysatorreduktion zu bewirken, und andererseits der reduzierte Katalysator durch eine Spülung mittels Luft oder einem sauerstoffhaltigen Gas passiviert wird.

2. Verfahren nach Anspruch 1, in dem die Temperatur für das Beimengen des Schwefelungsmittels zwischen 0 und 200°C liegt.

3. Verfahren nach einem der Anspuche 1 oder 2, in dem
a) bei einer Temperatur von zwischen 30 und 200°C in die Katalysatormasse mindestens ein Schwefelungsmittel in
b) Gegenwart von mindestens einem Lösungsmittel und/oder mindestens einer Komponente, die olefinartige Kohlenstoffverbindungen aufweist, außerhalb der Konversionsanlage beigemengt wird,
c) der Katalysator einer thermischen Behandlung in Abwesenheit von Wasserstoff außerhalb der Konversionsanlage unterzogen wird,
d) der Katalysator in Gegenwart von reinem oder verdünntem Wasserstoff zwischen 150 und 700°C außerhalb der Konversionsanlage behandelt wird,
e) der Katalysator auf eine übliche Temperatur abgekühlt und anschließend unter einem Inertgasstrom liegengelassen wird,
f) der Katalysator zunächst mit verdünntem Sauerstoff in einer Konzentration von weniger als ca. 10 Volumenprozent Sauerstoff und anschließend mit Luft gespült wird.

4. Verfahren nach Anspruch 1, in dem die ersten zwei Behandlungsstufen anhand von einem Schwefelungsmittel und von Wasserstoff gleichzeitig erfolgen.

5. Verfahren nach einem der Ansprüche 1 bis 4, in dem das Schwefelungsmittel aus der Gruppe, bestehend aus Elementarschwefel, den organischen Polysulfiden, geschwefeltem Wasserstoff, Mercaptanen, Kohlenstoffsulfid, Sulfiden, Disulfiden, den thiophenischen Verbindungen, ausgesucht wird.

6. Verfahren nach Anspruch 5, in dem das Schwefelungsmittel aus der Gruppe, bestehend aus Elementarschwefel, den organischen Polysulfiden, Dimethylsulfid und Dimethyldisulfid, ausgesucht wird.

7. Verfahren nach einem der Ansprüche 1 bis 6, in dem das Lösungsmittel ein Leichtbenzin ist.

8. Verfahren nach einem der Ansprüche 2 bis 6, in dem die Komponente ein olefinhaltiger Kohlenwasserstoff, insbesondere ein aus Fettsäuren abgeleitetes Öl, ist.

9. Verfahren nach einem der Ansprüche 1 bis 8, in dem der Katalysator - dem ein Schwefelungsmittel beigemengt wurde - mit reinem oder verdünntem Wasserstoff bei einer Temperatur von zwischen 250 und 600°C außerhalb der Konversionsanlage behandelt wird.

## Claims

1. A process for off-site pre-treatment of a catalyst containing a support based on alumina or doped alumina and at least one metal selected from the group formed by molybdenum, tungsten, cobalt and nickel, the process comprising:
• off-site incorporation into the catalytic mass of at least one sulphuration agent in the presence of at least one solvent or similar compound;
• off-site passivation of said catalyst;
the process being characterized in that a quantity of sulphur corresponding to 80% to 110% of the stoichiometric quantity required to pre-sulphurate the active elements of the catalyst, i.e., for the production of at least one sulphide selected from the group formed by MoS₂, Co₉S₈, WS₂ and Ni₃S₂, is incorporated into the catalytic mass and in that the catalyst into which a sulphuration agent has been incorporated is treated with pure or diluted hydrogen to reduce the catalyst and in that the reduced catalyst is passivated by flushing the catalyst with air or with a gas containing oxygen.

2. A process according to claim 1, in which the temperature at which the sulphuration agent is incorporated is in the range 0°C to 200°C.

3. A process according to claim 1 or claim 2, in which:
a) at least one sulphuration agent is incorporated into the catalytic mass off-site, between 30°C and 200°C, in the presence of at least one solvent and/or at least one constituent containing olefinic type carbon bonds;
b) the catalyst is heat treated off-site in the absence of hydrogen;
c) the catalyst is treated off-site between 150°C and 700°C in the presence of pure or diluted hydrogen;
d) the catalyst is cooled to normal temperature and then left in a stream of an inert gas;
e) the catalyst is then flushed, off-site, firstly with diluted oxygen at a concentration of less than about 10% (expressed as the volume of oxygen), then with air.

4. A process according to claim 1, in which the two first steps of treatment with a sulphurating agent and with hydrogen are simultaneous.

5. A process according to any one of claims 1 to 4, in which the sulphuration agent is selected from the group formed by elemental sulphur, organic polysulphides, hydrogen sulphide, mercaptans, carbon disulphide, sulphides, disulphides, and thiophene compounds.

6. A process according to claim 5, in which the sulphuration agent is selected from the group formed by elemental sulphur, organic polysulphides, dimethylsulphide and dimethyldisulphide.

7. A process according to any one of claims 1 to 6, in which the solvent is a white spirit.

8. A process according to any one of claims 2 to 6, in which the constituent is an olefinic hydrocarbon, in particular an oil derived from fatty acids.

9. A process according to any one of claims 1 to 8, in which the catalyst (into which the sulphuration agent has been incorporated) is treated off-site with pure or diluted hydrogen at a temperature in the range 250°C to 600°C.
